# EUROPEAN PATENT APPLICATION

(11) **EP 2 060 590 A1**
(43) Date of publication of application: **20.05.2009**
(21) Application number: 07792600.4
(22) Date of filing: 16.08.2007
(51) Int. Cl.: C08F 8/00, C08F 290/04, C08F 299/00, C08L 101/00

(54) **METHOD FOR PRODUCING BRANCHED VINYL POLYMER HAVING FUNCTIONAL GROUP**

(30) Priority: 18.08.2006 JP 2006223542
(71) Applicant: Kaneka Corporation, Kita-ku Osaka-shi, Osaka 530-8288 (JP)
(72) Inventor: FUJITA, Nao, Settsu-shi, Osaka 566-0072 (JP); SAKASHITA, Shinichi, Settsu-shi, Osaka 566-0072 (JP); NAKAGAWA, Yoshiki, Settsu-shi, Osaka 566-0072 (JP)
(74) Representative: Hart-Davis, Jason
(86) International application number: PCT/JP2007/065970
(87) International publication number: WO 2008/020614

(57) **Abstract**

An object of the present invention is to provide a novel method for producing a vinyl polymer (P) having a polar functional group (X) and having in its main chain a branched structure. The object can be achieved by the present invention providing a method for producing a vinyl polymer (P) having a polar functional group (X) and having in its main chain a branched structure, wherein while and/or after polymerization of a vinyl polymer (I) having a protecting group (Y) and having at its molecular terminal a group (A) containing carbon-carbon double bond, the protecting group (Y) is converted to the polar functional group (X).

## Description

### TECHNICAL FIELD

The present invention relates to a method for producing a vinyl polymer having a polar functional group and having in its main chain a branched structure.

### BACKGROUND ART

In order to satisfy a requirement that the performance and the function of polymeric material should be improved in recent years, approaches based on polymer blend/alloy, wherein two or more polymers are combined with each other, have been actively made. When polymers of the other types are mixed with each other, the individual polymers are not compatible with each other in many cases, so that macroscopic phase separation is caused. Physical properties of the resultant are extremely lower than those of each of the polymers before the mixing. Thus, in order to mix the other type polymers with each other to cause merits of the individual polymers to be exhibited, a method of using a compatibilizing agent together therewith to control the morphology has widely been used. As the compatibilizing agent, various random, block or graft copolymers are used. These copolymers themselves can also each be used as a constituting material.

As a conventional method for synthesizing a graft polymer, for example, the following methods are known:
(1) a method of bonding a polymer which is to be a main chain to a polymer which is to be graft chains by polymer-polymer reaction (refer to, for example, Patent Document 1: JP-A-8-183815 and Patent Document 2: JP-A-9-132647);
(2) a method based on polymer-monomer reaction of causing a monomer which is to be graft chains to react with a polymer which is to be a main chain, so as to attain polymerization for the graft chains; and
(3) the so-called macromonomer method of copolymerizing a monomer which is to be a main chain with a polymer which is to be graft chains.

The methods of synthesizing graft polymers (1) and (2) are widely adopted in the industrial field since the methods can be carried out with an excellent economy in a manner using an extruder as a reactive site, i.e., the so-called reactive processing. In other words, the synthesis method (1) can be conducted by kneading a polymer having, in the middle of the molecular chain thereof, one of two functional groups reactive with each other, and a polymer having, at its molecular chain terminal, the other functional groups in an extruder, examples of the two functional groups including a carboxyl group and a hydroxyl group, and an acid anhydride group and an amino group.

The synthesis method (2) can be conducted by kneading a polymer having in the middle of the molecular chain thereof a group capable of generating a radical, for example, a peroxide group, an azo group, a thiol group, a peracid ester group or an unsaturated group, or some other functional group, and a radical initiator, for example, benzoyl peroxide to generate radicals, and next adding thereto a monomer to cause reaction under the kneading conditions.

The synthesis method (3) using a macromonomer makes it possible that a graft polymer wherein the chemical structure of graft chains is controlled is relatively easily yielded by using a macromonomer wherein an average molecular weight and a molecular weight distribution are beforehand controlled.
Attention is paid to this method since a copolymer which is not easily synthesized by any other method can be synthesized.

In general, however, about macromonomers that are each a vinyl polymer having terminal functional group, a very large number of species are not synthesized since the polymerization for producing the macromonomer is not easily controlled. In particular, macromonomers which each has, at its terminal, a group containing carbon-carbon double bond are not easily produced.

About polymers each of which has terminal functional group, disclosed is, for example, a method of using a disulfide as a chain transfer agent to synthesize a (meth) acrylic polymer having at both terminals thereof alkenyl groups (see, for example, JP-A-5-255415 and JP-A-5-262808). Disclosed is also a method of using an iodine compound as a chain transfer agent to synthesize a polymer having at its terminal a hydroxyl group (see, for example, JP-A-2000-327713).

However, according to these synthesis methods, it is difficult to introduce a functional group into the terminal without fail. Moreover, it is indispensable to use the disulfide compound in a large amount, which is not less than the amount of the polymerizable monomer. Thus, there is caused a problem that termination reaction and chain transfer reaction, which are side reactions, cannot be restrained. Furthermore, even when any chain transfer agent is used, the resultant polymer has a wide molecule distribution and the chemical structure thereof is not controlled very much.

In the meantime, polymerization based on living polymerization process has been actively researched in recent years (see, for example, JP-A-2000-44626, JP-A-2000-191728 and JP-A-11-865963). In polymer-synthesis conducted by these polymerization methods, the molecular weight and the molecular weight distribution are easily controlled, and further a polymer having terminal functional group can be produced with relative ease by converting an active group at the living terminal to an arbitrary substituent.

However, in order to further satisfy a requirement that the performance and the function of polymeric material should be improved, it is desired to introduce various polar functional groups to a graft polymer synthesized by the method (1) or (3). When a polymer having various polar groups is used as a polymer (macromonomer) which is to be graft chains, the above-mentioned requirement is expected to be attained. Thus, in the case of attempting to synthesize such a macromonomer by a conventional polymerization process, active hydrogen contained in the polar-functional-group-having monomer, or some other substance interacts with growing terminals of the polymer chain, a catalyst for the polymerization, and others in some polymerization process to cause an inconvenience may be caused for the polymerization. For example, the catalyst is inactivated so that the polymerization is restrained; the molecular weights of the resultant polymers become uneven; the growing terminals of the polymer chain, functional groups and others are inactivated; and the other problems are caused. For this reason, there is a tendency that it is more difficult than expected that a macromonomer having a polar functional group is synthesized as desired. Even if a macromonomer having a polar functional group can be synthesized, the following is caused when this macromonomer is used, that is, the macromonomer is polymerized alone, or the macromonomer is copolymerized with the other monomer and/or the other polymer: the polar functional group may give an inconvenience to the polymerization. Furthermore, when the macromonomer is copolymerized with the other monomer and/or the other polymer, these are not sufficiently compatible with each other in accordance with the kinds and the polarities of these components. As a result, the copolymerization may become insufficient.
Because of problems as described above, under the present circumstances, it is difficult to produce stably such a graft polymer that can satisfy a recent requirement that the performance and the function of polymeric material should be improved.

### DISCLOSURE OF THE INVENTION

### PROBLEMS TO BE SOLVED BY THE INVENTION

In recent years, more importance has been attached to a matter that polymeric material is caused to have an optimal performance in accordance as usage thereof. Thus, an object of the present invention is to provide a novel method making it possible to produce easily a branched vinyl polymer having a molecular chain to which a polar-functional-group-containing structure is introduced.

### MEANS FOR SOLVING THE PROBLEMS

The inventors have made eager investigations to solve the above-mentioned problems, so as to succeed in the production of a branched vinyl polymer having a polar functional group. Thus, the present invention has been made.

That is, the present invention relates to:
(Claim 1) a method for producing a vinyl polymer (P) having a polar functional group (X) and having in its main chain a branched structure, wherein while and/or after polymerization of a vinyl polymer (I) having a protecting group (Y) and having at its molecular terminal a group (A) containing carbon-carbon double bond, the protecting group (Y) is converted to the polar functional group (X),
(Claim 2) the method for producing the vinyl polymer (P) according to claim 1, wherein the vinyl polymer (I) is polymerized in the presence of a vinyl monomer (II) and/or a vinyl polymer (III),
(Claim 3) the method for producing the vinyl polymer (P) according to claim 1 or 2, wherein the polar functional group (X) is at least one selected from the group consisting of a carboxyl group, a hydroxyl group, an epoxy group, an amino group, an amide group, a silyl group, an acetylacetonato group, and a mercapto group,
(Claim 4) the method for producing the vinyl polymer (P) according to any one of claims 1 to 3, wherein the main chain of the vinyl polymer (I) is produced by polymerizing mainly a monomer selected from the group consisting of a (meth)acrylic monomer, an acrylonitrile-based monomer, an aromatic vinyl monomer, a fluorine-containing vinyl monomer, and a silicon-containing vinyl monomer,
(Claim 5) the method for producing the vinyl polymer (P) according to any one of claims 1 to 4, wherein a number-average molecular weight of the vinyl polymer (I) is 3000 or more,
(Claim 6) the method for producing the vinyl polymer (P) according to any one of claims 1 to 5, wherein the vinyl polymer (I) has a ratio of a weight average molecular weight (Mw) to a number average molecular weight (Mn), (Mw/Mn) of less than 1.8, the molecular weights being measured by gel permeation chromatography,
(Claim 7) the method for producing the vinyl polymer (P) according to any one of claims 1 to 6, wherein the group (A) containing carbon-carbon double bond is a group represented by the following general formula 1:

   -OC(O)C(R¹)=CH₂ (1)

   (wherein R¹ represents hydrogen or an organic group having 1 to 20 carbon atoms) or a group represented by the following general formula 2:

   -R³-C(R²)=CH₂ (2)

   (wherein R² represents hydrogen or an organic group having 1 to 20 carbon atoms, and R³ represents a direct bond or a hydrocarbon group having 1 to 20 carbon atoms),
(Claim 8) the method for producing the vinyl polymer (P) according to any one of claims 1 to 7, wherein the vinyl polymer (I) is a polymer produced by living radical polymerization, (Claim 9) the method for producing the vinyl polymer (P) according to any one of claims 1 to 8, wherein the protecting group (Y) is a group represented by the following general formula 3:

   -C(O)-O-Z (3)

   (wherein Z is a group represented by the general formula 4:

   -Cₓ(R⁴)(R⁵)(R⁶) (4)

   (wherein Cₓ represents a carbon atom or a silicon atom, R⁹ to R⁶ each represents a hydrocarbon group having 1 to 20 carbon atoms, R⁴ to R⁶ may be the same or different, and R⁹ to R⁶ may be independent of each other or may be bonded to each other)),
(Claim 10) the method for producing the vinyl polymer (P) according to claim 9, wherein the Z group in the general formula 3 is selected from the group consisting of a t-butyl group, an isobornyl group, a norbornyl group, an adamanthyl group, a triphenylmethyl group, and a trimethylsilyl group,
(Claim 11) the method for producing the vinyl polymer (P) according to any one of claims 1 to 10, wherein the conversion from the protecting group (Y) to the polar functional group (X) is attained at 50°C or higher,
(Claim 12) the method for producing the vinyl polymer (P) according to any one of claims 1 to 11, wherein the conversion from the protecting group (Y) to the polar functional group (X) is attained in the presence of an acid catalyst,
(Claim 13) the method for producing the vinyl polymer (P) according to any one of claims 2 to 12, wherein the vinyl monomer (II) is at least one selected from the group consisting of a (meth)acrylic acid based monomer, a styrene based monomer, a fluorine-containing vinyl monomer, a silicon-containing vinyl monomer, a maleic acid-based monomer, a fumaric acid-based monomer, a maleimide-based monomer, a nitrile-group-containing vinyl monomer, an amide-group-containing vinyl monomer, a vinyl ester, an alkene, a conjugated diene, a vinyl chloride, a vinylidene chloride, an allyl chloride, and an allyl alcohol,
(Claim 14) the method for producing the vinyl polymer (P) according to any one of claims 2 to 12, wherein the vinyl polymer (III) is at least one selected from the group consisting of a (meth)acrylic acid-based polymer, a styrene-based polymer, a fluorine-containing vinyl polymer, a silicon-containing vinyl polymer, a maleic acid-based polymer, a fumaric acid-based polymer, a maleimide-based polymer, a nitrile-group-containing vinyl polymer, an amide-group-containing vinyl polymer, a vinyl ester-based polymer, a polyolefin-based polymer, a conjugated diene-based polymer, and a chlorine-containing polymer,
(Claim 15) the method for producing the vinyl polymer (P) according to any one of claims 1 to 14, wherein when the vinyl polymer (I) is polymerized in the presence of the vinyl polymer (III), the polymers are melt-kneaded with each other,
(Claim 16) the method for producing the vinyl polymer (P) according to claim 15, wherein the vinyl polymer (III) is a polyolefin resin, and further when the vinyl polymer (I) is polymerized together with the vinyl polymer (III), a radical initiator is added thereto,
(Claim 17) the method for producing the vinyl polymer (P) according to claim 16, wherein the polyolefin resin is a polyolefin resin having a polar functional group,
(Claim 18) a thermoplastic resin composition, comprising a thermoplastic resin and the vinyl polymer (P) according to any one of claims 15 to 17,
(Claim 19) the thermoplastic resin composition according to claim 18, wherein the vinyl polymer (P) is contained in an amount of 0.1 to 100 parts by weight based on 100 parts by weight of the thermoplastic resin,
(Claim 20) the thermoplastic resin composition according to claim 18 or 19, wherein the thermoplastic resin is a polyolefin resin or an olefin based thermoplastic elastomer, and
(Claim 21) a compact, comprising the composition according to any one of claims 18 to 20.

### EFFECT OF THE INVENTION

According to the present invention, it is possible to produce stably branched vinyl polymers (P) wherein the position of the structure containing a polar functional group (X), the introduced amount thereof, and others are controlled in accordance with the polarities required for various usages.

### BEST MODE FOR CARRYING OUT THE INVENTION

The method of the present invention for producing a vinyl polymer (P) is characterized in that while and/or after a vinyl polymer (I) having a protecting group (Y) and having at its molecular terminal a group (A) containing carbon-carbon double bond is polymerized, the protecting group (Y) is converted to a polar functional group (X). This makes it possible to yield easily and stably a vinyl polymer (P) which has a polar functional group (X) and has in its main chain a branched structure, and is controlled into a desired polarity and structure.

The following will describe, in detail, the method of the present invention for producing a vinyl polymer (P), which has a polar functional group (X) and further has in its main chain a branched structure.

### <<Vinyl polymer (I)>>

In the method of the present invention for producing a branched vinyl polymer (P), the following is supplied as a macromonomer for polymerization: a vinyl polymer (I) having a protecting group (Y) and further having at its molecular terminal a group (A) containing carbon-carbon double bond.

When the macromonomer that is a raw material of the branched vinyl polymer (P) is synthesized, the polar functional group (X) may give inconvenience to the polymerization in accordance with the process for the polymerization, the kind or the amount of the polar functional group (X), and others; details of this matter will be described later. As a result, it may become difficult to control the macromonomer into a , desired structure.

Thus, when the functional group to be introduced into the macromonomer is rendered a protected functional group (Y), which may be referred to as a "protecting group (Y) " hereinafter, instead of the polar functional group (X), the vinyl polymer (P) can stably be produced with a good controllability. This protected macromonomer, that is, the vinyl polymer having a protecting group (Y) and having at its molecular terminal a group (A) containing carbon-carbon double bond will be referred to merely as the "vinyl polymer (I)" hereinafter.

While and/or after the vinyl polymer (I), that is, the macromonomer (I), which has a protecting group (Y), is polymerized, the protecting group (Y) is optionally converted to the polar functional group (X). This manner makes it possible to produce the vinyl polymer (P) having the polar functional group (X) and having in a main chain thereof a branched structure, as desired, the polymer (P) being a target of the present invention.

### <<Main chain of the vinyl polymer (I)>>

The vinyl monomer which constitutes the main chain of the vinyl polymer (I) of the present invention is not particularly limited, but any of various monomers can be used. Examples of the vinyl monomer include (meth) acrylic acid monomers, such as (meth)acrylic acid, methyl (meth)acrylate, ethyl (meth)acrylate, n-propyl (meth)acrylate, isopropyl (meth)acrylate, n-butyl (meth)acrylate, isobutyl (meth)acrylate, t-butyl (meth)acrylate, n-pentyl (meth)acrylate, n-hexyl (meth)acrylate, cyclohexyl (meth)acrylate, n-heptyl (meth)acrylate, n-octyl (meth)acrylate, 2-ethylhexyl (meth)acrylate, nonyl (meth)acrylate, decyl (meth) acrylate, dodecyl (meth)acrylate, phenyl (meth)acrylate, tolyl (meth)acrylate, benzyl (meth)acrylate, 2-methoxyethyl (meth)acrylate, 3-methoxybutyl (meth)acrylate, 2-hydroxyethyl (meth)acrylate, 2-hydroxypropyl (meth)acrylate, stearyl (meth)acrylate, glycidyl (meth)acrylate, 2-aminoethyl (meth)acrylate, γ-(methacryloyloxypropyl)trimethoxysilane, ethylene oxide adduct of (meth)acrylic acid, trifluoromethylmethyl (meth)acrylate, 2-trifluoromethylethyl (meth)acrylate, 2-perfluoroethylethyl (meth)acrylate, 2-perfluoroethyl-2-perfluorobutylethyl (meth)acrylate, 2-perfluoroethyl (meth)acrylate, perfluoromethyl (meth)acrylate, diperfluoromethylmethyl (meth)acrylate, 2-perfluoromethyl-2-perfluoroethylmethyl (meth)acrylate, 2-perfluorohexylethyl (meth)acrylate, 2-perfluorodecylethyl (meth)acrylate, and 2-perfluorohexadecylethyl (meth)acrylate; styrene based monomers, such as styrene, vinyltoluene, α-methylstyrene, chlorostyrene, and styrenesulfonic acid and its salts; fluorine-containing vinyl monomers, such as perfluoroethylene, perfluoropropylene, and vinylidene fluoride; silicon-containing vinyl monomers, such as vinyltrimethoxysilane and vinyltriethoxysilane; maleic anhydride, maleic acid, and monoalkyl esters and dialkyl esters of maleic acid; fumaric acid and monoalkyl and dialkyl esters of fumaric acid; maleimide based monomers such as maleimide, methylmaleimide, ethylmaleimide, propylmaleimide, butylmaleimide, hexylmaleimide, octylmaleimide, dodecylmaleimide, stearylmaleimide, phenylmaleimide, and cyclohexylmaleimide; nitrile group-containing vinyl monomer, such as acrylonitrile and methacrylonitrile; amido group-containing vinyl monomers, such as acrylamide and methacrylamide; vinyl esters, such as vinyl acetate, vinyl propionate, vinyl pivalate, vinyl benzoate, and vinyl cinnamate; alkenes, such as ethylene and propylene; conjugated dienes, such as butadiene and isoprene; and vinyl chloride, vinylidene chloride, allyl chloride, allyl alcohol and the like.

In the above-mentioned expression manner, for example, the wording (meth)acrylic acid refers to acrylic acid and/or methacrylic acid.

These may be used alone, or plural ones of these may be copolymerized with each other. In particular, from the viewpoint of physical properties of products and others, preferred are styrene based monomers and (meth)acrylic acid based monomers. More preferred are acrylic acid ester monomers and methacrylic acid ester monomers, and particularly preferred are acrylic acid ester monomers. In the present invention, these preferred monomers may each be copolymerized with the other monomer(s), and may each be block-copolymerized therewith.

The vinyl polymer (I) of the present invention is preferably a polymer produced by polymerizing one or more of these preferred monomers "mainly". Specifically, the preferred monomer (s) is/are contained preferably at a ratio by weight of 60% or more. In a case where a protecting-group(Y)-containing monomer (i), which will be described later, is a styrene based monomer or (meth)acrylic acid based monomer, it is advisable that the preferred monomer(s) including the monomer (i) is/are contained at a proportion by weight of 60% or more.

A number-average molecular weight of the vinyl polymer (I) used in the present invention is not particularly limited, but is preferably from 3000 to 1000000, more preferably from 5000 to 500000, in particular preferably from 7000 to 100000.

A molecular weight distribution of the vinyl polymer (I) used in the present invention, that is, a ratio of a weight-average molecular weight to a number-average molecular weight, each of the molecular weights being measured by gel permeation chromatography, is not particularly limited, but is preferably less than 1.8, preferably less than 1.7, more preferably less than 1.5, even more preferably less than 1.3. When it is used to synthesize a graft copolymer or the like, there is produced an advantage that controlled side chains can be introduced thereinto. In the GPC measurement in the present invention, chloroform is usually used as a mobile phase therefor. The measurement is made in a polystyrene gel column. The number-average molecular weight and the other may be obtained relative to polystyrene standards.

The vinyl polymer (I) used in the invention may be linear or branched.

### <<Group (A) containing carbon-carbon double bond of the vinyl polymer (I)>>

The group (A) containing carbon-carbon double bond, which the vinyl polymer (I) used in the present invention has at its molecular terminal, is not particularly limited, but is preferably a group represented by the following general formula 1:

-OC(O)C(R¹)=CH₂ (1)

(wherein R¹ represents hydrogen or an organic group having 1 to 20 carbon atoms). Particularly preferred is the group wherein R¹ is hydrogen or a methyl group.

Moreover, the group (A) containing carbon-carbon double bond at the polymer terminal in the present invention is also preferably a group represented by the following general formula 2:

-R³-C(R²)=CH₂ (2)

(wherein R² represents hydrogen or an organic group having 1 to 20 carbon atoms, and R³ represents a direct bond or a hydrocarbon group having 1 to 20 carbon atoms). Particularly preferred is the group wherein R² is hydrogen or a methyl group. R³ may be linear or branched. R³ may have a cyclic structure or may contain an aromatic ring.

### «Method for synthesizing the main chain of the vinyl polymer (I) & Method for introducing the group (A) containing a carbon-carbon double bond»

The polymerizing method for constructing the main chain of the vinyl polymer (I) used in the present invention is not particularly limited, but is preferably radical polymerization, more preferably living radical polymerization, in particular preferably atom transfer radical polymerization. As for radical polymerization, it is generally said that the control thereof is difficult since the polymerization rate is high and termination reaction, due to coupling between radicals or the like, easily occurred. Although living radical polymerization and atom transfer radical polymerization are each radical polymerization, the termination reaction thereof does not easily occur and a polymer having a narrow molecular weight distribution (the value of Mw/Mn is from about 1.1 to 1.5) is obtained. Additionally, the molecular weight can freely be controlled in accordance with the charge ratio between the monomer and the initiator. Accordingly, living radical polymerization makes it possible to yield a polymer having a narrow molecular weight distribution and a low viscosity and further introduce individuals of a monomer having a specific functional group into arbitrary positions in the polymer. Thus, living radical polymerization is preferable as a process for producing the vinyl polymer of the present invention, which has a specific functional group.

In a narrow sense of the term, "living polymerization" means a polymerization in which the molecule grows with its growth termini being constantly activated. Generally, however, the term is used to broadly cover as well a pseudo-living polymerization reaction in which the polymer grows while molecules with an activated terminus and molecules with a deactivated terminus are in equilibrium, and the term as used in this specification also has the latter broad meaning. Regarding this living polymerization, especially atom transfer radical polymerization method, reference can be made to Matyjaszewski et al. : Journal of the American Chemical Society (J. Am. Chem. Soc.), 117, 5614 (1995), Macromolecules, 28, 7901 (1995), Science, 272, 866 (1996), WO 96/30421, WO 97/18247, Sawamoto et al.: Macromolecules, 28, 1721 (1995), JP-A-2000-44626, JP-A-2000-191728 or the like.

When this atom transfer radical polymerization method is used, it is preferred to use, as a catalyst, a transition metal catalyst containing copper as a central metal.

The method for introducing the group (A) containing a carbon-carbon double bond into the terminal (s) of the polymer may be a method known in the prior art, which is described in JP-A-5-255415, JP-A-2000-44626, JP-A-2000-191728, or some other publication. Examples of the method include
a method (1) using an alkenyl-group-containing disulfide as a chain transfer agent,
a method (2) of adding a "compound having both of an alkenyl group and various functional groups (including the alkenyl group)" at a terminal period of polymerization, a method (3) of substituting a terminal halogen group of a polymer with an alkenyl-group-containing compound and the like.

The number of the carbon-carbon double bond containing groups (A) at terminals of the vinyl polymer (I) per molecule of the polymer (I) is not particularly limited, but may be appropriately decided in accordance with the addition amount of the vinyl polymer (I) and the reactivity with the other vinyl monomer (II) and/or the other vinyl polymer (III), which will be described later. For example, the number is preferably from 0.5 to 10. In the case of using, as a constituting material, the vinyl polymer (I) used in the present invention alone or in the form of a (co)polymer combined with the other monomer, or in the case of using the vinyl polymer (I) as a modifier for the other polymer and desiring to make the melt viscosity low, the number is preferably from 0.5 to 1.5, more preferably from 0.6 to 1.4, even more preferably from 0.7 to 1.3.

In the case of using, as a constituting material, the vinyl polymer (I) used in the present invention alone or in the form of a (co)polymer combined with the other monomer, or in the case of using the vinyl polymer (I) as a modifier for the other polymer and desiring to express reinforcing effect, the number is preferably from 1.5 to 2.5, more preferably from 1.6 to 2.4, even more preferably from 1.7 to 2.3. In the case of desiring to express an especial modifying effect, the number may be from 2. 5 to 10. In this case, the main chain of the vinyl polymer (I) may be branched, as described above.

### <<Polar functional group (X)>>

The branched vinyl polymer (P) yielded in the present invention has a polar functional group (X). The polar functional group (X) is not particularly limited. Examples thereof include a carboxyl group, a hydroxyl group, an epoxy group, an amino group, an amide group, a silyl group, an acetylacetonato group, and a mercapto group. Of these groups, a carboxyl group is preferred.

### «Protecting group (Y) »

In the case of synthesizing a macromonomer, active hydrogen contained in a polar-functional-group-having monomer, or some other substance interacts with growing terminals of the polymer chain, a catalyst for the polymerization, and others in accordance with the polymerization process. Thus, an inconvenience may be caused for the polymerization. In this case, for example, the catalyst is inactivated so that the polymerization may be restrained, the molecular weights of the resultant polymers may become uneven, or the growing terminals of the polymer chain, the functional groups and others may be inactivated. Therefore, a polar-functional-group-having macromonomer may not be synthesized with ease. Moreover, in a case where the macromonomer is used, its polar functional group may give inconvenience for reaction when the macromonomer is polymerized alone or is polymerized with the other monomer and/or the other polymer.

Furthermore, when a macromonomer is copolymerized with the other monomer and/or the other polymer, these are not sufficiently compatible with each other in accordance with the kinds or polarities thereof. As a result, the copolymerization may become insufficient.

Thus, instead of direct introduction of the polar functional group (X) into a polymer, the vinyl polymer (I), to which a protected functional group (Y) (protecting group (Y)) is introduced, is synthesized, and after the polymerization thereof, the functional group (Y) is optionally de-protected, that is, is optionally converted to the polar functional group (X), whereby a polymer having the polar functional group (X) can be effectively yielded. According to this method, regardless of the kind of the polar functional group (X) and the polymerization process, the vinyl polymer (I) used in the present invention can stably be produced with a good controllability.

The word "protecting" means that a highly reactive functional group (polar functional group (X)) is turned to a functional group inactive with any subsequent reaction. The functional group is called a protecting group. The word "de-protecting" means that a protected functional group is subjected to an appropriate reaction after a necessary reaction is finished, thereby canceling the protection.

In the present invention, the protecting group (Y) for the polar functional group (X) is not particularly limited, and may be selected from known ones described in, for example, Jeremy Robertson, "Protecting Group Chemistry (Oxford Chemistry Primers)" (Oxford Univ Pr (Sr)) (August 03, 2000), Theodora W. Greene, Peter G, M. Wuts, "Protective groups in Organic Synthesis" (Wiley-Interscience) 3rd edition (May 15, 1999), and The Society of Organic Synthesis Chemistry, Japan "Organic Synthesis Handbook" (Marzen Co., Ltd.) (March 31, 1990).

In a case where the polar functional group (X) is a carboxyl group, the protecting group (Y) is preferably a group represented by the following general formula (3):

-C(O)-O-Z (3)

(wherein Z is a general formula 4:

-Cₓ(R⁴)(R⁵)(R⁶) (4)

wherein Cₓ represents a carbon atom or silicon atom; and R⁹ to R⁶ each represent a hydrocarbon group having 1 to 20 carbon atoms, R⁴ to R⁶ may be the same or different, and R⁹ to R⁶ may be each independently present or may be bonded to each other)).

Examples of Z in the general formula (3), which represents the protecting group (Y), include a methyl, a t-butyl group, an isobornyl group, a norbornyl group, an adamanthyl group, a triphenylmethyl group (trityl group), a trimethylsilyl group, and a benzyl (-CH₂C₆H₅) group. Preferred is a t-butyl group, an isobornyl group, a norbornyl group, an adamanthyl group, a triphenylmethyl group or a trimethylsilyl group.

In a case where the polar functional group (X) is a hydroxyl group, the protecting group (Y) may be rendered -OG wherein G is a methyl group, a triphenylmethyl (trityl) group, a t-butyl group, a benzyl group, a methoxybenzyl group, a trialkylsilyl group such as a trimethylsily group, a tetrahydropyranyl group, an acetyl group, a benzoyl group, or the like.

In a case where the polar functional group (X) is an amino group, the protecting group (Y) may be rendered -NHG, -NRG or -NG₂ wherein G is a formyl group (-CHO), an acetyl group (-COCH₃), a trifluoroacetyl group (-COCF₃), a benzoyl group (-COC₆H₅), a benzyl group (-CH₂C₆H₅), a methoxycarbonyl group (-C(O)-OCH₃), a t-butoxycarbonyl group (-C(O)-OC(CH₃)₃), a toluenesulfonyl group (tosyl group: -SO₂C₆H₄-p-CH₃), or the like.

The method for introducing the protecting group (Y) into the vinyl polymer (I) is not particularly limited. It is advisable to copolymerize a monomer (i) containing the protecting group (Y). The monomer (i) is not particularly limited as far as the monomer (i) has the protecting group (Y). A monomer represented by the following general formula 5 can be preferably used:

CH₂=C(R⁷)-R⁸-R⁹-Y (5)

(wherein R⁷ represents hydrogen or an organic group having 1 to 20 carbon atoms; and R⁸ and R⁹ each represent a direct bond or an organic group which may contain oxygen and has 1 to 20 carbon atoms, and may be the same or different).

Preferably, a monomer represented by the following can be suitably used:

CH₂=C(R⁷)-C(O)-O-R⁹-Y

CH₂=C(R⁷)-C₆Hₘ(R¹⁰)₄₋ₘ-R⁹-Y

CH₂=C(R⁷)-(CH₂)ₙ-Y

(wherein R⁷ and R⁹ are the same as described above, and R¹⁰ is hydrogen or an organic group having 1 to 20 carbon atoms, m is an integer of 0 to 4, and n is an integer of 0 to 20).

More preferably, a monomer represented by the following can be suitably used:

CH₂=C(R⁷)-C(O)-O-(CH₂)ₙ-Y

CH₂=C(R⁷)-C₆Hₘ(R¹⁰)₄₋ₘ-(CH₂)ₙ-Y

CH₂=C(R⁷)-(CH₂)ₙ-Y

(wherein R⁷, R¹⁰, m and n are the same as described above).

Specifically, when the polar functional group (X) is, for example, a carboxyl group, the following can be preferably used as the monomer (i): t-butyl (meth)acrylate, isobornyl (meth)acrylate, norbornyl (meth)acrylate, adamanthyl (meth)acrylate, triphenylmethyl (meth)acrylate, trimethylsilyl (meth)acrylate, benzyl (meth)acrylate or the like. In the case of using these monomer as the monomer (i), selective de-protecting, that is, the conversion from the protecting group (Y) to the polar functional group (X) can be attained under relatively mild conditions after the polymerization.

The use amount of the monomer (i) having the protecting group (Y) is not particularly limited, but may be from 0.01 to 100% by mole of the monomer (s) constituting the main chain of the vinyl polymer (I). It is preferred that the number of individuals of the protecting group (Y) per molecule of the vinyl polymer (I) is 0.8 or more.

### <<Method for synthesizing a branched vinyl polymer (P) having a polar functional group (X)>>

When the vinyl polymer (I) yielded as described above is homo-polymerized, a star-shaped polymer is obtained. When a vinyl monomer (II) and/or vinyl polymer (III) is/are caused to be present in the polymerization system of the vinyl polymer (I), a comb-shaped polymer is obtained.

According to the producing method of the present invention, at the time of polymerization reaction of the vinyl polymer (I), and/or after the polymerization, its protecting group (Y) is converted to a polar functional group (X), thereby making it possible to yield a star-shaped or comb-shaped polymer having the polar functional group (X), that is, a branched vinyl polymer (P) having the polar functional group (X).

The vinyl monomer (II) is not particularly limited, but examples of the vinyl monomer include (meth) acrylic acid monomers, such as (meth)acrylic acid, methyl (meth)acrylate, ethyl (meth)acrylate, n-propyl (meth)acrylate, isopropyl (meth)acrylate, n-butyl (meth)acrylate, isobutyl (meth)acrylate, t-butyl (meth)acrylate, n-pentyl (meth)acrylate, n-hexyl (meth)acrylate, cyclohexyl (meth)acrylate, n-heptyl (meth)acrylate, n-octyl (meth)acrylate, 2-ethylhexyl (meth)acrylate, nonyl (meth) acrylate, decyl (meth) acrylate, dodecyl (meth)acrylate, phenyl (meth)acrylate, tolyl (meth)acrylate, benzyl (meth)acrylate, 2-methoxyethyl (meth)acrylate, 3-methoxybutyl (meth)acrylate, 2-hydroxyethyl (meth)acrylate, 2-hydroxypropyl (meth)acrylate, stearyl (meth)acrylate, glycidyl (meth)acrylate, 2-aminoethyl (meth)acrylate, γ-(methacryloyloxypropyl)trimethoxysilane, ethylene oxide adduct of (meth)acrylic acid, trifluoromethylmethyl (meth)acrylate, 2-trifluoromethylethyl (meth)acrylate, 2-perfluoroethylethyl (meth)acrylate, 2-perfluoroethyl-2-perfluorobutylethyl (meth)acrylate, 2-perfluoroethyl (meth)acrylate, perfluoromethyl (meth)acrylate, diperfluoromethylmethyl (meth)acrylate, 2-perfluoromethyl-2-perfluoroethylmethyl (meth)acrylate, 2-perfluorohexylethyl (meth)acrylate, 2-perfluorodecylethyl (meth)acrylate, and 2-perfluorohexadecylethyl (meth)acrylate; styrene based monomers, such as styrene, vinyltoluene, α-methylstyrene, chlorostyrene, and styrenesulfonic acid and its salts; fluorine-containing vinyl monomers, such as perfluoroethylene, perfluoropropylene, and vinylidene fluoride; silicon-containing vinyl monomers, such as vinyltrimethoxysilane and vinyltriethoxysilane; maleic anhydride, maleic acid, and monoalkyl esters and dialkyl esters of maleic acid; fumaric acid and monoalkyl and dialkyl esters of fumaric acid; maleimide based monomers such as maleimide, methylmaleimide, ethylmaleimide, propylmaleimide, butylmaleimide, hexylmaleimide, octylmaleimide, dodecylmaleimide, stearylmaleimide, phenylmaleimide, and cyclohexylmaleimide; nitrile group-containing vinyl monomer, such as acrylonitrile and methacrylonitrile; amido group-containing vinyl monomers, such as acrylamide and methacrylamide; vinyl esters, such as vinyl acetate, vinyl propionate, vinyl pivalate, vinyl benzoate, and vinyl cinnamate; alkenes, such as ethylene and propylene; conjugated dienes, such as butadiene and isoprene; and vinyl chloride, vinylidene chloride, allyl chloride, allyl alcohol and the like. These may be used alone, or plural ones of these may be used.

A vinyl polymer (III) is not particularly limited, but may be polyolefin resins. Examples of the polyolefin resin include polyethylene; polypropylene; poly α-olefins such as polybutene-1, polyisobutene, polypentene-1, polymethylpentene-1 and the like; ethylene or α-olefin/a-olefin copolymers such as ethylene/propylene copolymer wherein the content by percentage of propylene is less than 75% by weight, ethylene/butene-1 copolymer, propylene/butene-1 copolymer wherein the content by percentage of propylene is less than 75% by weight and the like; and ethylene or α-olefin/a-olefin/diene monomer copolymers such as ethylene/propylene/5-ethylidene-2-norbornene copolymer wherein the content by percentage of propylene is less than 75% by weight.

The polyolefin resin may have a polar group. The polar group may be a hydroxyl group, a carboxyl group, an acid an anhydride group, an ester group, an epoxy group, an amino group, an amide group, a nitrile group, or a halogen group. Examples thereof include acid-modified polypropylenes such as maleic anhydride modified polypropylene, maleic acid anhydride polypropylene, and acrylic acid modified polypropylene; α-olefin/polar-group-having vinyl monomer copolymers, such as ethylene/vinyl chloride copolymer, ethylene/vinylidene chloride copolymer, ethylene/acrylonitrile copolymer, ethylene/methacrylonitrile copolymer, ethylene/vinyl acetate copolymer, ethylene/acrylamide copolymer, ethylene/methacrylamide copolymer, ethylene/acrylic acid copolymer, ethylene/methacrylic acid copolymer, ethylene/maleic acid copolymer, ethylene/ethyl acrylate copolymer, ethylene/butyl acrylate copolymer, ethylene/methyl acrylate copolymer, ethylene/maleic anhydride copolymer, ethylene/acrylic acid metal salt copolymer, and ethylene/methacrylic acid metal salt copolymer; chlorinated polyolefins such as chlorinated polyethylene, and chlorinated polypropylene.

Other examples thereof include ethylene or α-olefin/vinyl monomer copolymers such as ethylene/styrene copolymer, ethylene/methylstyrene copolymer, and ethylene/divinylbenzene copolymer; polydiene copolymers such as polybutadiene, and polyisoprene; vinyl monomer/diene monomer random copolymers such as styrene/butadiene random copolymer; vinyl monomer/diene monomer/vinyl monomer block copolymers such as styrene/butadiene/styrene block copolymer; hydrogenated (vinyl monomer/diene monomer random copolymers) such as hydrogenated (styrene/butadiene random copolymer); hydrogenated (vinyl monomer/diene monomer/vinyl monomer block copolymers) such as hydrogenated (styrene/butadiene/styrene block copolymer); vinyl monomer/diene monomer/vinyl monomer graft copolymers such as acrylonitril/butadiene/styrene graft copolymer and methyl methacrylate/butadiene/styrene graft copolymer; vinyl polymers such as polyvinyl chloride, polyvinylidene chloride, polyacrylonitrile, polyvinyl acetate, polyethyl acrylate, polybutyl acrylate, polymethyl methacrylate, and polystyrene; vinyl copolymers such as vinyl chloride/acrylonitrile copolymer, vinyl chloride/vinyl acetate copolymer, acrylonitrile/styrene copolymer, and methyl methacrylate/styrene copolymer. These may be used alone or in combination of two or more thereof.

Of these resins, preferred are polyolefin resins when the vinyl polymer (I) is polymerized by melt-kneading. Moreover, polyolefin resins having polarity are preferred since the compatibility with the vinyl polymer (I) is improved and the polymerization conversion of the vinyl polymer (I) is improved.

In the present invention, the polymerization of the vinyl polymer (I) for forming the branched vinyl polymer (P) is not particularly limited, but is preferably radical polymerization or anion polymerization, more preferably radical polymerization.

This radical polymerization is not particularly limited, but the polymerization may be conducted by conventional free radical polymerization, chain transfer radical polymerization, living radical polymerization, or any other radical polymerization.

The polymerization may be conducted by solution polymerization, bulk polymerization, aqueous polymerization or any other polymerization. The aqueous polymerization may be emulsion polymerization or suspension polymerization.

The initiator used in the free radical polymerization is not particularly limited, but examples thereof include organic peroxides such as benzoyl peroxide, lauroyl peroxide, t-butyl perbenzoate, t-butyl perpivalate, t-butyl peroxyisopropylcarbonate, t-butyl peroxyacetate, 2,2-t-di-t-butylperoxybutane, di-t-butyl peroxyhexahydroterephthalate, 1,1-di(t-butylperoxy)3,3,5-trimethylcyclohexane, 1,1-di(t-butylperoxy)cyclohexane, 1,1-di(t-amylperoxy)3,3,5-trimethylcyclohexane and 1,1-di(t-amylperoxy)cyclohexane; azo compounds such as 2,2'-azobisisobutyronitrile, 2,2'-azobis(4-methoxy-2,4-dimethylvaleronitrile), 2,2'-azobis(2-cyclopropylpropionitrile), and 2,2'-azobis(2-methylbutyronitrile); and other radical initiators. Other examples thereof include optical radical initiators such as acetophenone, propiophenone, benzophenone, xanthol, fluorein, benzaldehyde, anthraquinone, triphenylamine, carbazole, 3-methylacetophenone, 4-methylacetophenone, 3-pentylacetophenone, 2,2-diethoxyacetophenone, 4-methoxyacetophenone, 3-bromoacetophenone, 4-allylacetophenone, p-diacetylbenzene, 3-methoxybenzophenone, 4-methylbenzophenone, 4-chlorobenzophenone, 4,4'-dimethoxybenzophenone, 4-chloro-4'-benzylbenzophenone, 3-chloroxanthone, 3,9-dichloroxanthone, 3-chloro-8-nonylxanthone, benzoyl, benzoin methyl ether, benzoin butyl ether, bis(4-dimethylaminophenyl) ketone, benzyl methoxy ketal, 2-chlorothioxanthone, bis(2,4,6-trimethylbenzoyl)-phenylphosphine oxide, bis(2,6-dimethoxybenzoyl)-2,4,4-trimethylpentylphosphine oxide, and 2,4,6-trimethylbenzoyl-diphenyl-phosphine oxide.

These radical initiators may be used alone or in combination of two or more thereof, and may be used in combination with the other compound. Specific examples of the combination include a combination with an amine such as diethanolamine, dimethylethanolamine or triethanolamine, a combination wherein the combination is further combined with a iodonium salt such as diphenyliodonium chloride, and a combination with a colorant such as methylene blue, and an amine.

Chain transfer radical polymerization is a polymerization conducted in the state that a chain transfer agent is added to the above-mentioned free radical polymerization. As the initiator therefor, the above-mentioned initiators may be used. The chain transfer agent is not particularly limited, but the following may be used: n-dodecylmercaptane, t-dodecylmercaptane, n-octylmercaptane, n-octadecylmercaptane, 3-mercaptopropyltrimethoxysilane, 3-mercaptopropyltriethoxymercaptane, 3-mercaptopropylmethyldimethoxysilane, 3-mercaptopropylmethyldiethoxysilane, (H₃CO)3Si-S-S-Si(OCH₃)₃, CH₃(H₃CO)₂Si-S-S-SiCH₃(OCH₃)₂, (C₂H₅O)₃Si-S-S-Si(OC₂H₅)₃, CH₃(C₂H₅O)₂Si-S-S-SiCH₃(OC₂H₅)₂, (H₃CO)₃Si-S₃-Si(OCH₃)₃, (H₃CO)₃Si-5₄-Si(OCH₃)₃, (H₃CO)₃Si-S₆-Si(OCH₃)₃, α-methylstyrene dimer, or the like. In the case of using, in particular, a chain transfer agent having in the molecule thereof an alkoxysilyl group, for example, 3-mercaptopropyltrimethoxysilane, the alkoxysilyl group can be introduced to the terminal.

The living radical polymerization is not particularly limited, but examples thereof include SFRP (Stable Free Radical Polymerization), wherein growing terminal radicals of the polymer chain are captured by TEMPO (tetramethylpiperidine oxide), a cobalt porphyrin complex, or the like; and atom transfer radical polymerization described about the production of the vinyl polymer (I) in the present invention. These polymerizations are carried out under the above-mentioned conditions. When the vinyl polymer (I) is polymerized by living radical polymerization, the molecular weight and the molecular weight distribution of the polymer chain obtained by this polymerization are expected to be controlled.

The method for the radical polymerization in the present invention is not particularly limited. The temperature therefor is varied in accordance with the kinds of the radical initiator, vinyl polymer (I), radical polymerizable monomer to be used and compounds to be added, and others. Usually, the temperature is preferably from 50 to 300 °C, more preferably from 70 to 250°C.

In the case of conducting suspension polymerization in the present invention, a suspension stabilizer may be used; examples thereof include water-soluble polymers such as polyvinyl alcohol, methylcellulose, polyvinyl pyrrolidone, and polyacrylamide, and slightly-soluble inorganic salts such as magnesium pyrophosphate, calcium phosphate, and hydroxyapatite. A surfactant may be used together. In the case of using a slightly-soluble inorganic salt, it is preferred to use an anionic surfactant together, examples of the surfactant including sodium alkylsulfonate, and sodium dodecylbenzenesulfonate.

For the anion polymerization in the polymerization of the vinyl polymer (I) for forming the branched vinyl polymer (P), a known technique may be used. The anion polymerization initiator to be used is not particularly limited, but the following is preferably used: a mono-, bi- or poly-functional alkyl, aryl or aralkyl compound of an alkali compound; or an organic lithium compound, such as ethyl-, propyl-, isopropyl-, n-butyl-, sec-butyl-, tert-butyl-, phenyl-, diphenylhexyl-, hexamethylenedi-, butanedienyl-, isoprenyl-, or polystyryl lithium, or a polyfunctional compound thereof, 1,4-dilithiobutane, 1,4-dilithio-2-butene, or 1,4-dilithiobenzene. A necessary amount of the organic alkali metal compound depends on the molecular weight of the polymer to be produced, and the kind and amount of the other organic metal compound used, and further depends on the polymerization temperature. The necessary amount thereof is generally from 0.002 to 5% by mole of all the monomers.

The polymerization of the vinyl polymer (I) for forming the branched vinyl polymer (P) in the present invention may be conducted in the presence or absence of a solvent. Examples of the solvent include hydrocarbon solvents such as benzene and toluene; ether solvents such as diethyl ether and tetrahydrofuran; halogenated hydrocarbon solvents such as methylene chloride and chloroform; ketone solvents such as acetone, methyl ethyl ketone and methyl isobutyl ketone; alcohol solvents such as methanol, ethanol, propanol, isopropanol, n-butyl alcohol and tert-butyl alcohol; nitrile solvents such as acetonitrile, propionitrile and benzonitrile; ester solvents such as ethyl acetate and butyl acetate; carbonate solvents such as ethylene carbonate and propylene carbonate.

These may be used alone or in the form of a mixture of two or more. The polymerization is conducted preferably in a solvent content of less than 40% by mass. The reaction rate can be decreased by adding a compound for lowering polymerization rate, which is known as a retarder as described in WO 98/07766. Examples of the used retarder include organic magnesium compounds, organic aluminum compounds, and organic zinc compounds. These may be used alone or in the form of a mixture.

In the case of causing the vinyl polymer (III) to be present together in the polymerization of the vinyl polymer (I) for forming the vinyl polymer (P) in the present invention, the reaction format between the vinyl polymer (I) and the vinyl polymer (III) is not particularly limited. The format may be a format that the group (A) containing carbon-carbon double bond of the vinyl polymer (I) is copolymerized with the unsaturated bond in the vinyl polymer (III), or may be a format that a portion of the vinyl polymer (III) acts as a polymerization starting point and the group (A) containing carbon-carbon double bond of the vinyl polymer (I) is added thereto.

The addition amount of the vinyl polymer (I) when the branched vinyl polymer (P) is formed is not particularly limited, but may be appropriately decided in accordance with a desired structure of the branched vinyl polymer, and others. When the vinyl polymer (I) is polymerized alone or as a main component, a star-shaped polymer can be obtained. When the addition amount of the vinyl polymer (I) is made small, the polymer (I) can be used to function as a modifier for the vinyl monomer (II) and/or the vinyl polymer (III), which is/are a component or components other than the vinyl polymer (I).

In the case of using the vinyl polymer (I) having plural carbon-carbon double bond containing groups (A), the resultant polymer may lose thermoplasticity when the addition amount thereof is too large.

### <<Conversion from the protecting group (Y) to a polar functional group (X)>>

In the producing method of the present invention, the protecting group (Y) is converted to a polar functional group (X) while and/or after the vinyl polymer (I) is polymerized. In this way, the vinyl polymer (P) having the polar functional group (X) is yielded. The conversion from the protecting group (Y) to the polar functional group (X) may be conducted by heating, the addition of a catalyst, or the other method, which is not particularly limited.

The temperature when the protecting group (Y) is converted to the polar functional group (X) is not particularly limited, but is preferably 50°C or higher in order to shorten the period required for the conversion from the protecting group (Y) to the polar functional group (X). The temperature at the time of the conversion may be set to 100°C or higher, 150°C or higher, or 200°C or higher. The temperature may be appropriately decided, considering the thermal stabilities of the polar functional group (X), the protecting group (Y) and the vinyl polymer (I), and other factors.

When the protecting group (Y) is converted to the polar functional group (X), a catalyst which may be of various kinds may be added, which is not particularly limited.
For example, in a case where the polar functional group (X) is a carboxyl group (-COOH) and the protecting group (Y) is -C(O)-OC(CH₃)₃, the conversion is preferably in the presence of an acid catalyst. Examples of the acid catalyst include inorganic acids such as hydrochloric acid, sulfuric acid, nitric acid, and phosphoric acid; organic acids such as acetic acid, propionic acid, oxalic acid, malonic acid, maleic acid, citric acid, benzoic acid, p-toluenesulfonic acid, and benzenesulfonic acid; and protonic ion exchange resins of a sulfonic acid type and other types.
The amount thereof is preferably from 0.0001 to 50 parts by weight, more preferably from 0.001 to 20 parts by weight, even more preferably from 0.01 to 10 parts by weight, and in particular preferably from 0.1 to 5 parts by weight based on 100 parts by weight of the vinyl polymer (I), to which the protecting group (Y) is introduced, which is not particularly limited. When the catalyst amount is small, the conversion from the protecting group (Y) to the polar functional group (X) may become insufficient. If the catalyst is large, side reaction may be caused or the removal of an excess of the catalyst may become difficult.

When the catalyst is added, the system may be heated in order to accelerate the reaction. The above-mentioned temperature-adjusting condition may be applied.

When the protecting group (Y) is converted to the polar functional group (X), the following may be added, which is not particularly limited: for example, a solvent, a plasticizer, a compatibilizing agent, a filler, physical property adjustors such as a tackifier and a thixotropy supplier (drip preventive), an emulsifier, a surfactant, a dispersing agent, an antifoaming agent, a de-fogging agent, a solubilizer, a thickener, a lubricant, a flame retardant, a curability adjustor, a metal deactivating agent, an antiozonant, a phosphorus-containing peroxide decomposer, a lubricant, a pigment, a colorant, a foaming agent, a polymerization inhibitor, an antioxidant, an age resistor, a light resistance stabilizer, or the like. Examples of the solvent include hydrocarbon solvents such as benzene and toluene; ether solvents such as diethyl ether and tetrahydrofuran; halogenated hydrocarbon solvents such as methylene chloride and chloroform; ketone solvents such as acetone, methyl ethyl ketone and methyl isobutyl ketone; alcohol solvents such as methanol, ethanol, propanol, isopropanol, n-butyl alcohol and tert-butyl alcohol; nitrile solvents such as acetonitrile, propionitrile and benzonitrile; ester solvents such as ethyl acetate and butyl acetate; carbonate solvents such as ethylene carbonate and propylene carbonate. These may be used alone or in the form of a mixture of two or more thereof.

### «About the polymerization of the vinyl polymer (I) by melt-kneading»

When the vinyl polymer (I) is polymerized, the polymer (I) is melt-kneaded, whereby the vinyl polymer (P) in the present invention can be produced. By use of the vinyl polymer (I), which has at its molecular terminal a group (A) containing carbon-carbon double bond, the vinyl polymer (I) can be graft-polymerized by melt-kneading. In particular, by adding the vinyl polymer (III) thereto, the branched vinyl polymer (P) wherein moieties of the vinyl polymer (I) are branched chains can be obtained by an easy method using a simple machine.

In a case where the vinyl polymer (III) is a polyolefin resin, hydrogen is withdrawn from the polyolefin resin by use of a radical polymerization initiator. Thus, the active radicals generated in the polyolefin resin react with the vinyl polymer (I), so that a branched polyolefin can be obtained. According to the graft-reaction method based on melt-kneading, a branched vinyl polymer can be effectively and easily obtained, using a simple machine.

After the vinyl polymer (I) is graft-polymerized, the protecting group (Y) may be converted to the polar functional group (X) by the addition of a catalyst, or an appropriate selection of the heating temperature, the heating period or the like.

### Melt-kneading conditions

The heating temperature at the time of the melt-kneading is preferably a temperature at which the vinyl polymer (I) and/or the vinyl polymer (III) is/are sufficiently melted and further undergo (es) no thermal decomposition. In a case where the vinyl polymer (III) is a polyolefin resin, the temperature is preferably from 130 to 300°C, more preferably from 130 to 250°C since the polyolefin resin is sufficiently melted and further undergoes no thermal decomposition. The period for the melt-kneading (reaction period from the mixing of the radical polymerization initiator and so on) is usually from 30 seconds to 60 minutes. For example, in a case where the polar functional group (X) is a carboxyl group (-COOH) and the protecting group (Y) is -C(O)-OC(CH₃)₃, it is preferred that after the vinyl polymer (I) is caused to graft-react, the vinyl polymer (I) is melt-kneaded at 200 to 250 °C to convert the protecting group (Y) to the polar functional group (X),

Alternatively, it is preferred that after the vinyl polymer (I) is caused to graft-react, the above-mentioned acid catalyst is added thereto so as to melt-knead the vinyl polymer (I), thereby converting the protecting group (Y) to the polar functional group (X). The machine used for the melt-kneading may be an extruder, a Banbury mixer, a mill, a kneader, a heating roll or the like. Preferred is a method using a monoaxial or twin-screw extruder from the viewpoint of productivity. In order to mix the individual materials sufficiently evenly, the melt-kneading may be repeated plural times.

### Radical polymerization initiator

The radical polymerization initiator is generally a peroxide, an azo compound, or the like. Specific examples thereof include ketone peroxides such as methyl ethyl ketone peroxide, and methyl acetoacetate peroxide; peroxyketals such as 1,1-bis(t-butylperoxy)-3,3,5-trimethylcyclohexane, 1,1-bis(t-butylperoxy)cyclohexane, n-butyl-4,4-bis(t-butylperoxy)valerate, and 2,2-bis(t-butylperoxy)butane; hydroperoxides such as permethanehydroperoxide, 1,1,3,3-tetramethylbutylhydroperoxide, diisopropylbenzenehydroperoxide, and cumenehydroperoxide; dialkyl peroxides such as dicumylperoxide, 2,5-dimethyl-2,5-di(t-butylperoxy)hexane, α,α'-bis(t-butylperoxy-m-isopropyl)benzene, t-butylcumylperoxide, di-t-butylperoxide, and 2,5-dimethyl-2,5-di(t-butylperoxy)hexyne-3; diacylperoxides such as benzoyl peroxide; peroxydicarbonates such as di(3-methyl-3-methoxybutyl) peroxydicarobnate, and di-2-methoxybutyl peroxydicarbonate; peroxyesters such as t-butyl peroxyoctate, t-butyl peroxyisobutyrate, t-butyl peroxylaurate, t-butyl peroxy-3,5,5-trimethylhexanoate, t-butyl peroxyisopropylcarbonate, 2,5-dimethyl-2,5-di(benzoylperoxy)hexane, t-butyl peroxyacetate, t-butyl peroxybenzoate, and di-t-butyl peroxyisophthalate.; and other organic peroxides, from which one or more may be selected.

Of these compounds, preferred are compounds having a particularly high hydrogen-withdrawing power. Examples of such radical polymerization initiators include peroxyketals such as 1,1-bis(t-butylperoxy)-3,3,5-trimethylcyclohexane, 1,1-bis(t-butylperoxy)cyclohexane, n-butyl-4,4-bis(t-butylperoxy)valerate, and 2,2-bis(t-butylperoxy)butane; dialkyl peroxides such as dicumylperoxide, 2,5-dimethyl-2,5-di(t-butylperoxy)hexane, α,α'-bis(t-butylperoxy-m-isopropyl)benzene, t-butylcumylperoxide, di-t-butylperoxide, and 2,5-dimethyl-2,5-di(t-butylperoxy)hexyne-3; diacylperoxides such as benzoyl peroxidel; and peroxyesters such as t-butyl peroxyoctate, t-butyl peroxyisobutyrate, t-butyl peroxylaurate, t-butyl peroxy-3,5,5-trimethylhexanoate, t-butyl peroxyisopropylcarbonate, 2,5-dimethyl-2,5-di(benzoylperoxy)hexane, t-butyl peroxyacetate, t-butyl peroxybenzoate, and di-t-butyl peroxyisophthalate, from which one or more may be selected.

The addition amount of the radical polymerization initiator is preferably from 0.01 to 10 parts by weight, more preferably from 0.2 to 5 parts by weight based on 100 parts by weight of the polyolefin resin which is a vinyl polymer (III). If the amount is less than 0.01 parts by weight, the modification does not advance sufficiently. When the amount is more than 10 parts by weight, the fluidity or the mechanical property falls.

When the vinyl polymer (I) is caused to graft-react, the order that the vinyl polymer (I), the polyolefin resin which is a vinyl polymer (III), and the radical polymerization initiator are added, and the method for the melt-kneading are not particularly limited. Examples of the method include a method of mixing the polyolefin resin with the vinyl polymer, melt-kneading the resultant mixture, and subsequently adding thereto the radical polymerization initiator, a method of melt-kneading the polyolefin resin and subsequently adding thereto the vinyl polymer and radical polymerization initiator successively, and a method of dry-blending the polyolefin resin, the vinyl polymer, and the radical polymerization initiator collectively, and then melt-kneading the resultant blend.

### Ratio between the polyolefin resin and the vinyl polymer (I)

About the ratio of the vinyl polymer (I) into the polyolefin resin at the time of the graft reaction by the melt-kneading, the amount of the vinyl polymer (I) is preferably from 0.1 to 150 parts by weight, more preferably from 0.1 to 100 parts by weight, and even more preferably from 0.1 to 50 parts by weight, particularly preferably from 3 to 50 parts by weight based on 100 parts by weight of the polyolefin resin. If the amount is smaller than this range, the advantageous effect of polarity, which is a target of the present invention, is not obtained. Conversely, if the amount is too large, the polyolefin amount is reduced so that a polymer made from the vinyl polymer molecules that are not grafted to the polyolefin skeleton comes to be generated. As a result, the physical properties tend to lower.

### «Vinyl polymer (P) and a compound thereof»

The branched vinyl polymer (P) yielded by the producing method of the present invention has a polar functional group (X). As described above, the polar functional group (X) is not particularly limited, but examples thereof include a carboxyl group, a hydroxyl group, an epoxy group, an amino group, an amide group, a silyl group, an acetylacetonato group, and a mercapto group. Of these groups, a carboxyl group is preferred.

The vinyl polymer (P) yielded by the present invention may have only one, or two or more out of these polar functional groups (X).

About the branched vinyl polymer (P) yielded by the present invention, the content of the polar functional group (X) may be decided in accordance with a required polarity. It is preferred that the polar functional group (X) is contained in a number of at least 0.8 or more per molecule of the vinyl polymer (P).

The branched vinyl polymer (P) yielded by the present invention may be blended with the other resin, or a may be used as an additive for the other resin. More specifically, the vinyl polymer (P) may be used as a paintability improver, a printability improver, an adhesiveness improver, an antistatic agent, an anti-fogging improver, a hydrophilicity imparter, an impact resistance improver, a workability improver, a compatibilizing agent, a matting agent, and a heat resistance improver, or the like.

Examples of the thermoplastic resin which is blended with the vinyl polymer (P) in the present invention or is added to the vinyl polymer (P) include a homopolymer or copolymer yielded by polymerizing 70 to 100% by weight of at least one selected from the group consisting of polymethyl methacrylate resin, polyvinyl chloride resin, polyolefin resin, olefin based thermoplastic elastomer, polycarbonate resin, polyester resin, a mixture of polycarbonate resin and polyester resin, aromatic alkenyl compounds, vinyl cyanide compounds, and (meth)acrylic acid esters, and 0 to 30% by weight of the other vinyl monomer copolymerizable with these vinyl monomers, such as ethylene, propylene or vinyl acetate, and/or a conjugated diene monomer copolymerizable therewith, such as butadiene or isoprene; polystyrene resin; polyphenylene ether resin; and a mixture of polystyrene resin and polyphenylene ether resin. However, the thermoplastic resin is not limited to these resins, but thermoplastic resins in a wide scope may be used.

Examples of the polyolefin resin include polypropylene homopolymer, high-density polyethylene, low-density polyethylene, linear low-density polyethylene, poly-1-butene, polyisobutylene, random copolymer or block copolymer wherein the ratio between propylene and ethylene and/or 1-butene is any ratio, ethylene-propylene-diene terpolymer wherein the ratio between ethylene and propylene is any ratio and the amount of a diene component is 50% or less by weight, polymethylpentene, cyclic polyolefins such as copolymer made from cyclopentadiene, and ethylene and/or propylene, and random copolymer made from ethylene or propylene, and 50% or less by weight of a vinyl compound such as vinyl acetate, methacrylic acid alkyl ester, acrylic acid alkyl ester, or aromatic vinyl.

The above-mentioned olefin based thermoplastic elastomer may be an elastomer composed of an olefin based copolymerized rubber, a crystalline olefin based polymer olefin based copolymerized rubber and a crystalline olefin based polymer. The form thereof may be a simple blend composition of these components, a partially-crosslinked blend composition, a completely-crosslinked (dynamically crosslinked) blend composition, or the like. It is preferred that the elastomer is crosslinked.

Specific examples thereof include a method of adding an organic peroxide to a kneaded substance of an olefin based copolymerized rubber and a crystalline polyolefin polymer to crosslink the two partially, and a method of kneading an olefin based copolymerized rubber and an organic peroxide to crosslink the rubber partially, and blend this with a crystalline olefin based polymer. It is also allowable to add an organic peroxide to a kneaded substance of an olefin based copolymerized rubber and a crystalline polyolefin polymer to crosslink the olefin based copolymerized rubber completely.

The olefin based copolymerized rubber is an essentially amorphous rubbery copolymer which is a copolymer composed of at least one polyene (usually, diene) and two or more nonpolar α-olefin monomers, and is preferably ethylene-propylene-diene copolymerized rubber (EPDM). The crystalline olefin based polymer is a crystalline polymer obtained by polymerizing a nonpolar α-olefin monomer, such as ethylene, propylene, butene-1 or pentene-1, in a usual way, and typical examples thereof include polyethylene and copolymers thereof, polypropylene and copolymers thereof, and polybutene. Polypropylene and copolymers thereof are preferred.

About the ratio between the olefin based copolymerized rubber and the crystalline olefin based polymer, usually, the proportion of the olefin based copolymerized rubber is from 40 to 80% by weight and the proportion of the crystalline olefin based polymer is from 60 to 20% by weight of the total of the two components. The two components are subjected to kneading treatment at not lower than the melting points, so as to be turned to an olefin based thermoplastic elastomer. In order to give a useful nature as an elastomer, as a means for crosslinking the olefin based copolymerized rubber, phenol resin, sulfur, or some other material may be used besides the above-mentioned organic peroxides.

The thermoplastic polyolefin elastomer may contain other components as far as the rubbery property thereof is not damaged. Examples of the other components include oil, filler, carbon black, and a stabilizer. Specific examples of the olefin based thermoplastic elastomer include "MIRASTOMER" manufactured by Mitsui Chemicals, Inc., "THERMORAN, ZERAS" manufactured by Mitsubishi Chemical Corp., "EXCELLEN" manufactured by Sumitomo Chemical Co., Ltd., and "SANTPLANE" manufactured by AES Japan.

Of the examples given as the thermoplastic resin which is blended to the vinyl polymer (P) or is added thereto, particularly preferable are polymethyl methacrylate resin, polyvinyl chloride resin, polycarbonate resin, polyester resin and others since characteristics of weather resistance and impact resistance are caused to be easily exhibited. Very preferable are polyolefin resin, olefin based thermoplastic elastomer and others since characteristics of paintability, printability, adhesiveness, high-frequency melt-bondability, antistatic property, anti-fogging property, hydrophilicity, and others are caused to be easily exhibited.

Polyolefin resin and olefin based thermoplastic elastomer are versatilely used in a wide scope since they are inexpensive and excellent in shapability, rigidity, heat resistance, chemical resistance, electric non-conductance, and others. On the other hand, polyolefin resin and olefin based thermoplastic elastomer have problems about paintability, adhesiveness, high-frequency melt-bondability (high-frequency weldability), oil resistance, and others, for which polarity is a required characteristic. Therefore, in the case of blending/adding, with/to polyolefin resin or olefin based thermoplastic elastomer, the vinyl polymer (P), which has a polar functional group, polarity can be given thereto, so as to make it possible to improve the paintability, printability, adhesiveness, high-frequency melt-bondability, antistatic property, anti-fogging property, hydrophilicity and others.

In a case where the vinyl polymer (P) is, in particular, a branched polyolefin resin to which a vinyl polymer is grafted, the compatibility thereof with polyolefin resin and olefin based thermoplastic elastomer is improved. Thus, while polarity is given thereto, a fall in the mechanical properties can be restrained. Thus, the case is preferred.

Furthermore, the following may be added as other additives: a flame retardant, an antibacterial agent, a light stabilizer, a coloring agent, a fluidity improver, a lubricant, an anti-blocking agent, an antistatic agent, a crosslinking agent, a crosslinking aid, a modifier, a pigment, a dye, an electroconductive filler, a chemical or physical foaming agent which may be of various kinds, and others. These may be used alone or in combination of two or more. The anti-blocking agent is preferably, for example, silica or zeolite, which may be naturally or synthetically yielded. Moreover, perfectly spherical crosslinked particles such as crosslinked acrylic perfectly spherical particles are also preferred. The antistatic agent is preferably an N,N-bis-(2-hydroxyethyl)-alkylamine having 12 to 18 carbon atoms, or a glycerin aliphatic acid ester. Furthermore, the following are preferably used as the lubricant: aliphatic acid metal salt lubricants, aliphatic acid amide lubricants, aliphatic acid ester lubricants, aliphatic acid lubricants, aliphatic alcohol lubricants, partial esters each made from an aliphatic acid and a polyhydric alcohol, paraffin lubricants, and others. Two or more selected from these examples may be used.

The proportion of the thermoplastic resin blended/added with/to the vinyl polymer (P) yielded in the present invention may be selected at will in accordance with the kind of the thermoplastic resin, and the use purpose or use manner thereof. In a case where characteristics of the thermoplastic resin are desired to be improved without damaging original characteristics of the resin, the amount of the vinyl polymer (P) is from 0.1 to 100 parts by weight based on 100 parts by weight of the thermoplastic resin. In a case where the thermoplastic resin is, in particular, polyolefin resin or olefin based thermoplastic elastomer, the amount of the vinyl polymer (P) is preferably from 0.1 to 100 parts by weight, more preferably from 0.1 to 70 parts by weight based on 100 parts by weight of the polyolefin resin or olefin based thermoplastic elastomer.

The amount is more and more preferably from 0.3 to 50 parts by weight, even more preferably from 0.5 to 20 parts by weight. If the amount of the vinyl polymer (P) is less than this range, the modifying effect based on the addition of polarity tends not to be obtained. If the amount is more than this range, original mechanical properties of the polyolefin resin or olefin based thermoplastic elastomer are declined and further an economic issue may be caused.

The resin composition in the present invention may be produced by methods exemplified below. In the case of producing the composition using a closed or opened batch-type kneading machine such as a Laboplast mill, a Brabender, a Banbury mixer, a kneader, or a roll, the following method may be used: all the beforehand-mixed components other than the crosslinking agent are charged into the kneading machine; the components are then melt-kneaded until the mixture turns even; next, the crosslinking agent is added thereto; and after the crosslinking reaction advances sufficiently, the melt-kneading is stopped.

In the case of producing the composition using a continuous type melt-kneading machine such as a monoaxial extruder or a twin screw extruder, the following method may be used: a method of melt-kneading all the components other than the crosslinking agent beforehand by means of the melt-kneading machine such as the extruder until the mixture turns even, making the resultant into pellets, dry-blending the crosslinking agent with the pellets, and further melt-kneading the resultant blend by means of the/a melt-kneading machine such as the extruder or a Banbury mixer to crosslink dynamically the isobutylene polymer having at its terminal an alkenyl group; or a method of melt-kneading all the components other than the crosslinking agent by means of the melt-kneading machine such as the extruder, adding the crosslinking agent thereto from the middle of the cylinder of the extruder, and further melt-kneading the mixture to crosslink dynamically the isobutylene polymer having at its terminal an alkenyl group.

At the time of the melt-kneading, the temperature preferably ranges from 130 to 300°C. When the melt-kneading temperature is lower than 130°C, the thermoplastic resin, such as aromatic vinyl thermoplastic elastomer or polyolefin resin, is not melted so that the composition cannot be sufficiently kneaded. When the temperature is higher than 300°C, the thermoplastic resin, such as isobutylene based polymer, tends to undergo thermal decomposition easily.

The method for producing a resin composition may be a method of mixing the components mechanically and then making the mixture into a shape of pellets by use of a known machine such as a Laboplast mill, a Brabender, a Banbury mixer, a kneader, a roll, a monoaxial extruder, or a twin screw extruder. The extruded and shaped pellets can be formed or molded in the range of wide temperatures. For the formation or molding, a conventional injection molding machine, a blow molding machine, an extruder or the like is used.

Furthermore, an impact resistance improver, a stabilizer, a plasticizer, a lubricant, a flame retardant, a pigment, a filler and others may be optionally incorporated into the thermoplastic resin modified in the present invention. Specific examples thereof include impact resistance improvers such as methyl methacrylate-butadiene-styrene copolymer (MBS resin), acrylic graft copolymer, and acryl-silicone composite rubbery graft copolymer; stabilizers such as triphenyl phosphate; lubricants such as polyethylene wax, and polypropylene wax; flame retardants, such as triphenyl phosphate, tricresyl phosphate, other phosphate flame retardants, decabromobiphenyl, decabromobiphenyl ether, other bromine-containing flame retardants, and antimony trioxide; pigments such as titanium oxide, zinc sulfide, and zinc oxide; and fillers such as glass fiber, asbestos, wollastonite, mica, talc, and calcium carbonate.

An antioxidant or ultraviolet absorbent known in the prior art may be appropriately used in the modified thermoplastic resin in the present invention as the need arises.

Examples of the plasticizer include phthalic acid esters such as dibutyl phthalate, diheptyl phthalate, di(2-ethylhexyl) phthalate and butylbenzyl phthalate; non-aromatic bibasic acid esters such as dioctyl adipate and dioctyl sebacate; polyalkylene glycol esters such as diethylene glycol dibenzoate and triethylene glycol dibenzoate; phosphates such as tricresyl phosphate and tributyl phosphate; chlorinated paraffins; and hydrocarbon oils such as alkyldiphenyl and partially hydrogenated terphenyl. These plasticizers, which are not necessarily essential, may be used alone or in the form of a mixture of two or more thereof in order to attain the adjustment of the physical properties and the nature, and other purposes. These plasticizers may be blended when the polymer is produced.

Examples of the solvent include aromatic hydrocarbon solvents such as toluene and xylene; ester solvents such as ethyl acetate, butyl acetate, amyl acetate and cellosolve acetate; and ketone solvents such as methyl ethyl ketone, methyl isobutyl ketone and diisopropyl ketone. These solvents may be used when the polymer is produced.

### «Usage»

Since the vinyl polymer (P) yielded in the present invention has a polar functional group (X) and further a branched structure, the vinyl polymer (P) is used suitably as a resin modifier or a compatibilizing agent. The vinyl polymer (P) yielded in the present invention and a compound thereof can be made into a desired shape by various forming or molding methods. The formed or compact has a high impact strength and other characteristics. The forming or molding method is not particularly limited, but specific examples thereof include calendaring, injection molding, melt spinning, blow molding, extrusion, thermal forming, and foam molding.

The vinyl polymer (P) yielded in the present invention and a compound thereof may be used for or as the same articles as the existing thermoplastic resins, which is not limited. Preferably, they are used as an injection molded product, a sheet, a film, a hollow formed body, a pipe, a square bar, a deformed product, a thermally formed body, a foamed product, or a fiber. The vinyl polymer (P) yielded in the present invention and a compound thereof may be soft or hard. When the vinyl polymer (P) yielded in the present invention and a compound thereof is soft, they may be used for/as articles as described below.

(1) Modifiers
   Resin modifiers (such as an impact resistance modifier, paintability improver, printability improver, adhesiveness improver, antistatic agent, anti-fogging agent, hydrophilicity-imparting agent, damping performance modifier, gas barrier property modifier or softening agent for thermoplastic resin, an impact resistance modifier, and a stress depressor for thermosetting resin), an asphalt improver (asphalt modifier for roads, asphalt modifier for waterproof sheets, or waterproof material for bridge deck systems), a tire modifier (improver for the wet-grip performance of tires), and a rubber modifier.
(2) Adhesives and pressure-sensitive adhesives
   A hot melt adhesive, a water-based adhesive, a solvent-based adhesive, and tackifiers.
(3) Viscosity modifiers
   Viscosity adjustors to be added to oil, lubricating oil, or the like
(4) Coating agents
   A base resin to be used in a paint or the like, and a sealant

(5) Materials to be used instead of PVC
   An electric wire coating material for cables, connectors, plugs or the like, a doll and other toys, a tape for curing, logo marks (for sportswear or sports shoes), a carrier bad, a wrapping material for clothing, sail of a truck, a film for agriculture (for house cultivation), an eraser, an apron for business (tarpaulin), an interior material for buildings, such as a floor material or ceiling material, a raincoat, an umbrella, a shopping bag, a skin material for chairs, sofas or the like, a skin material for belts, bags or the like, a garden hose, a gasket (packing) of a refrigerator, a flexible hose of a washing machine or cleaner, and a car interior material.
(6) Damping members, vibration proof members, buffering members
   Damping members, in particular, damping members laminated into a multi-layered structure, together with aluminum and steel plates, vibration proof members, buffering members (for buildings, cars, floor-damping, flooring, playground equipment, precision machinery, and electronic instruments).
   A sole, a grip of a stationery or toy, a grip of an article of diary use or a carpenter's tool, a grip of a golf club, a pad or the like, and a tennis racket, table tennis racket or the other playing-racket rubber and grip.

(7) Soundproof materials and sound absorbing materials
   Car interior and exterior materials, a car ceiling material, a material for railway vehicles, and a material for piping.
(8) Packing materials, sealing materials such as a sealant, and wrapping materials
   A gasket, a gasket for buildings, and plug or stopper materials.
   A glass sealing material for laminated glass and multi-layered glass.
   Gas barrier materials or members such as a wrapping material, a sheet, a multi-layered sheet, a container, and a multi-layered container.
   A civic engineering sheet, a waterproof sheet, a packaging and transporting material, and a sealant.
(9) Foamed body
   Foamed bodies by bead foaming, slow-pressuring foaming and extrusion foaming (such as pipe coating material, synthetic wood, or a wood chip based foamed body).
   A carrier for a foaming agent in chemical foaming and physical foaming.

(10) Others
   Tubes for clothing, flame retardants, and medical use, a closure lid, a cap, a bag, a gasket, a hose, shoes, and sports goods.
   Car members such as a foaming fireproof sheet, an airbag cover, a bumper, an interior component (skin material of an instrument panel, a shift knob or the like), a weather strip, a roof molding, and an under-door molding).
   Containers for food, such as a food tray for microwave ovens, a portioning food container, a laminate film for food containers, polystyrene sheets for food containers (a sashimi tray and a chicken egg package), a container for cup noodle, a polystyrene based network-form foamed product, a cool confectionery cup, and a transparent drinking cup.
   An IC tray, a CD-ROM chassis, a wheel cap, an elastic thread, a nonwoven cloth, a wire harness, a back sheet for paper diapers, a compound material for two color formation, an underwater goggle, a mouse for personal computers, a cushion, and a stopper.

The modified thermoplastic resin in the present invention is also used for electrical and electronic parts, and mechanical parts. Specific examples thereof include a connector, a coil bovine, various sockets, a condenser, a variable condenser, an optical pickup, various terminal boards, plugs, a magnetic head base, pipes for cars, an air intake nozzle, an intake manifold, a carburetor, a lamp socket, a lamp reflector, a lamp housing, and others.

### Examples

Specific working examples of the present invention will be described hereinafter; however, the present invention is not limited to the working examples. In the following working examples and comparative examples, the word "part(s)" and the symbol "%" represent "part(s) by weight" and "% by weight", respectively.

### (Measurement of Molecular Weight)

Any "a number-average molecular weight" and any "a molecular weight distribution (the ratio of a weight-average molecular weight to a number-average molecular weight)" were calculated out by a standard polystyrene conversion method using a gel permeation chromatography (GPC). As its GPC column, a column into which polystyrene crosslinked gel was filled (shodox GPC K-804, manufactured by Showa Denko K.K.) was used; and as its GPC solvent, chloroform was used. The number of functional groups introduced per molecule of a polymer was calculated out on the basis of concentration analysis according to ¹H-NMR and the number-average molecular weight obtained by GPC.

### (Graft Amount Analysis)

When a vinyl polymer was grafted to a polyolefin resin, the graft amount thereof was calculated out by the following method. First, a portion of the melted reactant was press-molded at 200°C for about 5 minutes, and the resultant was named compact A. In the meantime, another portion of the melted reactant was heated at 130°C for 3 hours to be dissolved in xylene having a weight 80 times the weight of the reactant, and insoluble matters therein were removed. Thereafter, the system was allowed to stand and cooled overnight at room temperature, and was filtered to collect the reprecipitate. Furthermore, resulting reprecipitate, which is removed an unreacted portion of the vinyl polymer, and so on, was press-molded at 200°C for about 5 minutes. This was named compact B. The compact A and the compact B were subjected to transmission type IR analysis to gain the peak ratio between the carbonyl groups (C=O, near 1734 cm⁻¹) and a C-H groups (near 1454 cm⁻¹). The graft amount was then estimated.

### (Wet Tensile Force Test)

A method for evaluating paintability and printability was according to "Plastic - Film and Sheet - Wet Tensile Force Test" of JIS K-6768. About any sample for evaluation, a press sheet having a thickness of 0.3 mm was used.

### (High-Frequency Welder Test)

For a method for evaluating adhesiveness, a high-frequency welder tester (YTO-5A, manufactured by Yamamoto Vinita Co., Ltd.) was used. An evaluation was made under conditions that the mold temperature was 60°C, the period for welding was 4 seconds, and the anode current value was 0.28 A. About any sample for the evaluation, press sheets having a thickness of 0.3 mm were used. About the criterion for the evaluation or judgment, the sheets after the test were lightly pulled by both hands so as to be peeled off from each other. In a case where the sheets were kept in the state that they adhered to each other, the case is represented by "good". In a case where the sheets were peeled off from each other, the case is represented by "bad".

### (Production Example 1)

Charged were 10 parts of t-butyl acrylate, 30 parts of n-butyl acrylate, 0.42 part of copper (I) bromide, and 8.8 parts of acetonitrile. The components were stirred at 80°C under a nitrogen atmosphere. Thereto were added 1.9 parts of ethyl 2-bromobutyrate, and further the resultant was stirred at 80°C. Thereto was added 0.034 part of pentamethyldiethylenetriamine (hereinafter referred to as triamine) to start reaction. During the course of the reaction, thereto were intermittently added 60 parts of n-butyl acrylate, and further thereto was appropriately added triamine. While the additions were carried out, heating and stirring were continued to set the temperature of the reaction solution into the range of 80 to 90°C. After the conversion of butyl acrylate reached 97%, volatile materials in the reaction system were removed under reduced pressure.

This was diluted with toluene, and then to the resultant were added synthetic hydrotalcite, aluminum silicate, and a filter aid. The resultant was heated and stirred in the atmosphere of a mixed gas of oxygen and nitrogen. The solid therein was removed, and then the solution was concentrated. This was diluted with N,N-dimethylacetoamide, and the solution was heated and stirred at 70°C for 7 hours in the coexistence of potassium acrylate. After the concentration, the solution was diluted with toluene to remove the solid. This was concentrated to yield a polymer [I-1]. The number-average molecular weight of the polymer [I-1] was 12000, and the molecular weight distribution was 1.1, and the number of acryloyl groups introduced per molecule of the polymer was 1.0.

### (Comparative Production Example 1)

Charged were 20 parts of n-butyl acrylate, 0.42 part of copper (I) bromide, and 8.8 parts of acetonitrile. The components were stirred at 80°C under a nitrogen atmosphere. Thereto were added 1.9 parts of ethyl 2-bromobutyrate, and further the resultant was stirred at 80°C. Thereto was added 0.034 part of pentamethyldiethylenetriamine (hereinafter referred to as triamine) to start reaction. During the course of the reaction, thereto were intermittently added 80 parts of n-butyl acrylate, and further thereto was appropriately added triamine. While the additions were carried out, heating and stirring were continued to set the temperature of the reaction solution into the range of 80 to 90°C. After the conversion of butyl acrylate reached 95%, volatile materials in the reaction system were removed under reduced pressure.

This was diluted with toluene, and then to the resultant were added synthetic hydrotalcite, aluminum silicate, and a filter aid. The resultant was heated and stirred in the atmosphere of a mixed gas of oxygen and nitrogen. The solid therein was removed, and then the solution was concentrated. This was diluted with N,N-dimethylacetoamide, and the solution was heated and stirred at 70°C for 3 hours in the coexistence of potassium acrylate. After the concentration, the solution was diluted with toluene to remove the solid. This was concentrated to yield a comparative polymer [1]. The number-average molecular weight of the comparative polymer [1] was 11,000, and the molecular weight distribution was 1.1, and the number of acryloyl groups introduced per molecule of the polymer was 0.9.

### (Example 1)

To 100 parts of the polymer [I-1] yielded in Production Example 1 were added 1 part of Darocure 1173 (a photoinitiator which is used to generate radical, manufactured by Ciba Specialty Chemicals Inc.) and 0.5 part of Irgacure 819 (a photoinitiator which is used to generate radical, manufactured by Ciba Specialty Chemicals Inc.), and then the mixture was irradiated with ultraviolet rays. Conditions that the ultraviolet rays were radiated were as follows: the lamp load was 80 W/cm, the radiating distance was 15 cm, and the radiation was once performed for 30 seconds. This was dissolved into 100 parts of toluene, and to the solution were added 2 parts of p-toluenesulfonic acid. The solution was heated and refluxed at 100°C for 7 hours. This was filtrated, and then volatile materials were removed therefrom to yield a polymer [P-1] having polar functional groups (carboxyl groups) and further having a branched structure (star-shape). The number-average molecular weight of the polymer [P-1] was 21, 000, and the peak top molecular weight thereof was 78, 000. According to ¹³C-NMR, it was verified that the signal (28 ppm) of methyl groups in t-butyl groups, which was present about the polymer [I-1], disappeared about the polymer [P-1]. Furthermore, it was verified in a manner described blow that the polymer [P-1] had carboxyl groups.

The polymer [P-1] was dissolved into chloroform, separately generated diazomethane was added thereto, and the solution was stirred. Volatile materials were removed under reduced pressure. Thereafter, the resultant was dissolved into deuterochloroform to conduct ¹H-NMR analysis. As a result, at 3. 6 ppm, a signal originating from -COOCH₃ groups was observed. In the present system, diazomethane reacted selectively with only -COOH groups (carboxyl groups) to generate the -COOCH₃ groups. Thus, it was demonstrated that the polymer [P-1] had carboxyl groups. Furthermore, the amount of the carboxyl groups in the polymer [P-1] was calculated out from the integrated value of the -COOCH₃ groups. As a result, the amount was 10% by mole in all of the acrylic units. This was consistent with the amount of t-butyl acrylate used when the polymer [I-1] was synthesized.
The above has demonstrated that about the polymer [P-1], the -COOC(CH₃)₃ groups of the polymer [I-1] are quantitatively converted to carboxyl groups.

### (Example 2)

A polymer [P-2] having polar groups (carboxyl groups) and further having a branched structure (comb-shape) was yielded by conducting the same operations as in Production Example 1 except that a mixture of 50 parts of the polymer [I-1] and 50 parts of ethyl acrylate was used instead of the 100 parts of the polymer [I-1] used in Example 1. The number-average molecular weight of the polymer [P-2] was 27,000, and the peak top molecular weight thereof was 74,000.
NMR was used in the same way as in Example 1 to verify that about the polymer [P-2], the -COOC(CH₃)₃ groups of the polymer [I-1] were quantitatively converted to carboxyl groups.

### (Example 3)

Into a Laboplast mill (50C150 manufactured by Toyo Seiki Co., Ltd.; blade shape: roller shape R60), the temperature of which was set to 200°C, were supplied 100 parts of maleic anhydride modified polypropylene (H-1100P, manufactured by Toyo Kasei Co., Ltd.) and 25 parts of the polymer [I-1] yielded in Production Example 1, and the components were melted. After it was confirmed that the components were evenly melt-kneaded, thereto were added 2.5 parts of 1,3-di(t-butylperoxyisopropyl)benzene (PERBUTYL P, manufactured by NFO Corp.; one minute half-life temperature: 175°C), and then the components were melt-kneaded for about 10 minutes.

Thereafter, in the Laboplast mill, the components were further melt-kneaded at 240°C for 10 minutes to yield a branched polyolefin resin [P-3]. The graft amount of the branched polyolefin resin [P-3] was 20%. The vinyl polymer was grafted to the maleic anhydride modified polypropylene in satisfactory yield. According to ¹³C-NMR, it was verified that the signal (28 ppm) of methyl groups in t-butyl groups, which was present about the polymer [I-1], disappeared about the polymer [P-3].

### (Example 4)

Into a Laboplast mill (50C150 manufactured by Toyo Seiki Co., Ltd.; blade shape: roller shape R60), the temperature of which was set to 200 °C, were supplied 100 parts of maleic anhydride modified polypropylene (H-1100P, manufactured by Toyo Kasei Co., Ltd.) and 43 parts of the polymer [I-1] yielded in Production Example 1, and the components were melted. After it was confirmed that the components were evenly melt-kneaded, thereto were added 2.5 parts of 1,3-di(t-butylperoxyisopropyl)benzene (PERBUTYL P, manufactured by NFO Corp.; one minute half-life temperature: 175°C), and then the components were melt-kneaded for about 10 minutes.

Thereafter, in the Laboplast mill, the components were further melt-kneaded at 240°C for 10 minutes to yield a branched polyolefin resin [P-4]. The graft amount of the branched polyolefin resin [P-4] was 25%. The vinyl polymer was grafted to the maleic anhydride modified polypropylene in satisfactory yield. According to ¹³C-NMR, it was verified that the signal (28 ppm) of methyl groups in t-butyl groups, which was present about the polymer [I-1], disappeared about the polymer [P-4].

### (Comparative Example 1)

Into a Laboplast mill (50C150 manufactured by Toyo Seiki Co., Ltd.; blade shape: roller shape R60), the temperature of which was set to 200°C, were supplied 100 parts of maleic anhydride modified polypropylene (H-1100P, manufactured by Toyo Kasei Co., Ltd.) and 43 parts of the comparative polymer [1] yielded in Comparative Production Example 1, and the components were melted. After it was confirmed that the components were evenly melt-kneaded, thereto were added 2.5 parts of 1,3-di(t-butylperoxyisopropyl)benzene (PERBUTYL P, manufactured by NFO Corp.; one minute half-life temperature: 175°C), and then the components were melt-kneaded for about 10 minutes to yield a comparative branched polyolefin resin [R-1]. The graft amount of the comparative branched polyolefin resin [R-1] was 27%. The vinyl polymer was grafted to the maleic anhydride modified polypropylene in satisfactory yield.

### (Example 5)

In a Laboplast mill (50C150 manufactured by Toyo Seiki Co., Ltd.; blade shape: roller shape R60), the temperature of which was set to 200°C, kneaded were 100 parts of homopolypropylene (F113G, manufactured by Prime Polymer Co., Ltd.) and 12 parts of the branched polyolefin resin [P-3] for about 5 minutes. The resultant resin composition was used as a sample for evaluation.

### (Examples 6 to 9, and Comparative Examples 2 to 5)

About Examples 6 to 9 and Comparative Examples 2 to 5 also, blend parts shown in Table 1 were used to form samples in the same way as in Example 5, and evaluate the samples. The evaluation results are shown in Table 1. An additional raw material is described below.

### Comparative Example Olefin based thermoplastic elastomer (EXCELLEN EP3711, manufactured by Sumitomo Chemical Co., Ltd.)

**Table 1**

| | | Example 5 | Example 6 | Example 7 | Example 8 | Example 9 | Comparative Example 2 | Comparative Example 3 | Comparative Example 4 | Comparative Example 5 |
|---|---|---|---|---|---|---|---|---|---|---|
| Branched polyolefin resin | P-3 | 12 | 25 | | | | | | | |
| | P-4 | | | 12 | 25 | 67 | | | | |
| | R-1 | | | | | | | 12 | 25 | |
| Thermoplastic resin | Homopolypropylene | 100 | 100 | 100 | 100 | | 100 | 100 | 100 | |
| | Olefin based thermoplastic elastomer | | | | | 100 | | | | 100 |
| Wet tensile force evaluation | dyn/cm | 35 | 36 | 36 | 36 | - | 34 | 34 | 31 | - |
| High-frequency welder evaluation | Judgment | - | | | | good | - | | | bad |

In Examples 5 to 8, incorporated was a branched polyolefin resin which was a resin to which a vinyl polymer was grated wherein graft chains had polar functional groups (carboxyl groups and/or carboxyl acid anhydride groups); therefore, the wettability of the polyolefin resin compositions was high. On the other hand, the wettability of Comparative Example 2 was low since no branched polyolefin resin was incorporated therein.

Comparative Examples 3 to 4 were each a branched polyolefin resin but the resin was a branched polyolefin resin wherein graft chains had no polar functional group; therefore, the wettability thereof was lower than Examples. In Example 9, a branched polyolefin resin having polar functional groups was incorporated; therefore, the olefin based thermoplastic elastomer composition was able to be welded by means of a high-frequency welder. On the other hand, in Comparative Example 5, no branched polyolefin resin was incorporated; therefore, the composition was not welded by means of a high-frequency welder.

## Claims

1. A method for producing a vinyl polymer (P) having a polar functional group (X) and having in its main chain a branched structure,
wherein while and/or after polymerization of a vinyl polymer (I) having a protecting group (Y) and having at its molecular terminal a group (A) containing carbon-carbon double bond, the protecting group (Y) is converted to the polar functional group (X).

2. The method for producing the vinyl polymer (P) according to claim 1, wherein the vinyl polymer (I) is polymerized in the presence of a vinyl monomer (II) and/or a vinyl polymer (III).

3. The method for producing the vinyl polymer (P) according to claim 1 or 2, wherein the polar functional group (X) is at least one selected from the group consisting of a carboxyl group, a hydroxyl group, an epoxy group, an amino group, an amide group, a silyl group, an acetylacetonato group, and a mercapto group.

4. The method for producing the vinyl polymer (P) according to any one of claims 1 to 3, wherein the main chain of the vinyl polymer (I) is produced by polymerizing mainly a monomer selected from the group consisting of a (meth)acrylic monomer, an acrylonitrile-based monomer, an aromatic vinyl monomer, a fluorine-containing vinyl monomer, and a silicon-containing vinyl monomer.

5. The method for producing the vinyl polymer (P) according to any one of claims 1 to 4, wherein a number-average molecular weight of the vinyl polymer (I) is 3000 or more.

6. The method for producing the vinyl polymer (P) according to any one of claims 1 to 5, wherein the vinyl polymer (I) has a ratio of a weight average molecular weight (Mw) to a number average molecular weight (Mn), (Mw/Mn) of less than 1.8, the molecular weights being measured by gel permeation chromatography.

7. The method for producing the vinyl polymer (P) according to any one of claims 1 to 6, wherein the group (A) containing carbon-carbon double bond is a group represented by the following general formula 1:
-OC(O)C(R¹)=CH₂ (1)
(wherein R¹ represents hydrogen or an organic group having 1 to 20 carbon atoms) or a group represented by the following general formula 2:
-R³-C(R²)=CH₂ (2)
(wherein R² represents hydrogen or an organic group having 1 to 20 carbon atoms, and R³ represents a direct bond or a hydrocarbon group having 1 to 20 carbon atoms).

8. The method for producing the vinyl polymer (P) according to any one of claims 1 to 7, wherein the vinyl polymer (I) is a polymer produced by living radical polymerization.

9. The method for producing the vinyl polymer (P) according to any one of claims 1 to 8, wherein the protecting group (Y) is a group represented by the following general formula 3:
-C(O)-O-Z (3)
(wherein Z is a group represented by the general formula 4:
-Cₓ(R⁴)(R⁵)(R⁶) (4)
(wherein Cₓ represents a carbon atom or a silicon atom, R⁴ to R⁶ each represents a hydrocarbon group having 1 to 20 carbon atoms, R⁴ to R⁶ may be the same or different, and R⁹ to R⁶ may be independent of each other or may be bonded to each other)).

10. The method for producing the vinyl polymer (P) according to claim 9, wherein the Z group in the general formula 3 is selected from the group consisting of a t-butyl group, an isobornyl group, a norbornyl group, an adamanthyl group, a triphenylmethyl group, and a trimethylsilyl group.

11. The method for producing the vinyl polymer (P) according to any one of claims 1 to 10, wherein the conversion from the protecting group (Y) to the polar functional group (X) is attained at 50°C or higher.

12. The method for producing the vinyl polymer (P) according to any one of claims 1 to 11, wherein the conversion from the protecting group (Y) to the polar functional group (X) is attained in the presence of an acid catalyst.

13. The method for producing the vinyl polymer (P) according to any one of claims 2 to 12, wherein the vinyl monomer (II) is at least one selected from the group consisting of a (meth)acrylic acid based monomer, a styrene based monomer, a fluorine-containing vinyl monomer, a silicon-containing vinyl monomer, a maleic acid-based monomer, a fumaric acid-based monomer, a maleimide-based monomer, a nitrile-group-containing vinyl monomer, an amide-group-containing vinyl monomer, a vinyl ester, an alkene, a conjugated diene, a vinyl chloride, a vinylidene chloride, an allyl chloride, and an allyl alcohol.

14. The method for producing the vinyl polymer (P) according to any one of claims 2 to 12, wherein the vinyl polymer (III) is at least one selected from the group consisting of a (meth)acrylic acid-based polymer, a styrene-based polymer, a fluorine-containing vinyl polymer, a silicon-containing vinyl polymer, a maleic acid-based polymer, a fumaric acid-based polymer, a maleimide-based polymer, a nitrile-group-containing vinyl polymer, an amide-group-containing vinyl polymer, a vinyl ester-based polymer, a polyolefin-based polymer, a conjugated diene-based polymer, and a chlorine-containing polymer.

15. The method for producing the vinyl polymer (P) according to any one of claims 1 to 14, wherein when the vinyl polymer (I) is polymerized in the presence of the vinyl polymer (III), the polymers are melt-kneaded with each other.

16. The method for producing the vinyl polymer (P) according to claim 15, wherein the vinyl polymer (III) is a polyolefin resin, and further when the vinyl polymer (I) is polymerized together with the vinyl polymer (III), a radical initiator is added thereto.

17. The method for producing the vinyl polymer (P) according to claim 16, wherein the polyolefin resin is a polyolefin resin having a polar functional group.

18. A thermoplastic resin composition, comprising a thermoplastic resin and the vinyl polymer (P) according to any one of claims 15 to 17.

19. The thermoplastic resin composition according to claim 18, wherein the vinyl polymer (P) is contained in an amount of 0.1 to 100 parts by weight based on 100 parts by weight of the thermoplastic resin.

20. The thermoplastic resin composition according to claim 18 or 19, wherein the thermoplastic resin is a polyolefin resin or an olefin based thermoplastic elastomer.

21. A compact, comprising the composition according to any one of claims 18 to 20.
